# EUROPÄISCHE PATENTSCHRIFT

(11) **EP 1 864 194 B1**
(45) Veröffentlichungstag und Bekanntmachung des Hinweises auf die Patenterteilung: **09.09.2015**
(21) Anmeldenummer: 06703564.2
(22) Anmeldetag: 17.01.2006
(51) Int. Cl.: G05G 1/30, G05G 1/38, G01D 11/24, F02D 11/02, G01D 5/14

(54) **FAHRPEDALMODUL MIT MAGNETISCHEM SENSOR**
ACCELERATOR PEDAL MODULE PROVIDED WITH A MAGNETIC SENSOR
MODULE PEDALE D'ACCELERATEUR A CAPTEUR MAGNETIQUE

(30) Priorität: 23.03.2005 DE 102005013442
(43) Veröffentlichungstag der Anmeldung: 12.12.2007
(73) Patentinhaber: ROBERT BOSCH GMBH, 70442 Stuttgart (DE)
(72) Erfinder: KLOTZBUECHER, Thomas, 73635 Rudersberg (DE); BAUER, Bernhard, 71554 Weissach (DE); WEISS, Sebastien, 70736 Fellbach (DE); KOEBERLE, Bernd, 70736 Fellbach (DE)
(86) Internationale Anmeldenummer: PCT/EP2006/050244
(87) Internationale Veröffentlichungsnummer: WO 2006/100133

(56) Entgegenhaltungen:
- EP-A- 0 670 235
- EP-A- 0 959 328
- EP-A- 1 394 650
- WO-A-2004/107079
- DE-A1- 10 008 540
- DE-A1- 10 104 872
- US-A1- 2003 112 003

## Beschreibung

### Stand der Technik

Die Erfindung geht aus von einem Fahrpedalmodul zum Steuern der Leistung einer Antriebsmaschine, insbesondere einer Brennkraftmaschine eines Fahrzeugs, mit einem an einem Lagerbock um eine Schwenkachse drehbar gehaltenen Pedalhebel, gemäß dem Oberbegriff von Patentanspruch 1.

Aus der US 2004/0041558 A1 und aus der EP 1394 650 A1 ist ein gattungsgemäßes Fahrpedalmodul bekannt, mit einem Hall-Sensor als Drehwinkelsensor, welcher abhängig von der Änderung der von einem einzelnen Ringmagneten erzeugten Magnetfeldstärke ein elektrisches Signal aussteuert. Der Ringmagnet ist im Pedalhebel aufgenommen und koaxial mit der Schwenkachse angeordnet. Die Auswertung der von den dort verwendeten Hall-Sensoren ausgesteuerten elektrischen Signale erfolgt im Hinblick auf eine Änderung der Feldstärke des vom Magneten erzeugten Magnetfeldes. Falls der Pedalhebel beispielsweise spielbedingt in Bezug zu seiner Schwenkachse kippt, so ändert sich die Magnetfeldstärke und damit auch das ausgesteuerte elektrische Signal des Hall-Sensors auch wenn der Pedalhebel nicht um seine Schwenkachse betätigt wurde. Weiterhin ändert sich die magnetische Feldstärke, die die Messgröße bildet, mit der Temperatur, so dass Temperaturänderungen das Messergebnis verfälschen können.

Die WO 2004/107079 A1 zeigt ein Fahrpedal mit einem U-förmigen einstückigen Magneten mit zwei Schenkeln und mit zwischen den beiden Schenkeln des Magneten befindlichen magnetempfindlichen Elementen. Bei einer Schwenkbewegung des Pedalarms verändert sich das auf die magnetempfindlichen Elemente einwirkende Magnetfeld. Dadurch können die magnetempfindlichen Elemente dem Schenkwinkel entsprechende Signale generieren.

In der EP 1182 461 A2 ist eine Sensoreinrichtung mit Hall-Elementen beschrieben, mit deren Hilfe eine Änderung der Richtung eines Magnetfeldes detektiert werden kann, um Drehwinkel von Läufern elektrischer Motoren zu ermitteln.

Aus der WO2004/107079 A ist ein Fahrpedalmodul bekannt, mit einem Sensorelement und einem drehbar gelagerten Pedalhebel, wobei die Drehbewegung des Pedalhebels durch eine Sensorelement detektierbar ist und wobei das Fahrpedalmodul zwei parallel angeordnete Magnetscheiben umfasst, die mit dem drehbaren Pedalhebel mechanisch gekoppelt sind. Das Sensorelement ist in einem Spalt zwischen den parallelen Magnetscheiben angeordnet.

### Vorteile der Erfindung

Es wird vorgeschlagen, dass das Magnetfeld durch wenigstens zwei bipolare Magneten erzeugt wird, denen das Sensorelement vorzugsweise symmetrisch zwischengeordnet ist. Dies bewirkt, dass die von den Magneten jeweils erzeugten Magnetfelder das Sensorelement von verschiedenen Seiten her beaufschlagen und sich in einem Schnittbereich überdecken und addieren, was eine vorteilhaft hohe Magnetfeldstärke und eine hohe Homogenität des Magnetfeldes im Bereich des Sensors bedingt. Ein Magnetfeld hoher Homogenität im Bereich des Hall-Sensors wirkt sich günstig für die Messgenauigkeit aus. Durch die Anordnung des Sensorelements zwischen den Magneten können weiterhin Signaländerungen, die aus Verkippungen des Pedalhebels in Bezug zur Schwenkachse resultieren, kompensiert werden. Deshalb ermöglichen diese Maßnahmen auch, dass die Lagerstelle des Pedalhebels am Lagerbock mit einem größeren Lagerspiel ausgeführt und dann ein Reibbelag zur Erzeugung der bei Fahrpedalen gewünschten Krafthysterese direkt auf den Lagerflächen angeordnet werden kann. Nicht zuletzt hat ein temperatur- oder belastungsbedingter Verzug von Teilen des Fahrpedalmoduls einen geringeren Einfluss auf die Genauigkeit des vom Sensor ausgesteuerten elektrischen Signals. Insgesamt erhöht sich daher die Messgenauigkeit des Sensorelements und es ergibt sich ein robusteres Fahrpedalmodul.

Darüber hinaus erfolgt die Auswertung der vom Sensorelement erzeugten Signale nicht hinsichtlich einer Änderung der Magnetfeldstärke, sondern hinsichtlich der Änderung der Richtung des Magnetfeldes. Die Magnetfeldrichtung ändert sich nicht mit schwankenden Temperaturen, so dass die vom Sensorelement des Fahrpedalmoduls gemäß der Erfindung ausgesteuerten elektrischen Signale auch aus diesem Grund unabhängig von Temperaturschwankungen sind.

Die Magnete sind als Magnetscheiben und in Bezug zu einer Scheibenebene diametral magnetisiert ausgebildet. Unter einer diametralen Magnetisierung ist eine 2-polige Magnetisierung an jeder Stirnseite der Magnetscheiben zu verstehen.

Weiterhin sind die Magnetscheiben in Bezug zueinander beispielsweise koaxial und parallel zueinander angeordnet, wobei die Mittelachsen der Magnetscheiben koaxial mit der Schwenkachse sind.

Eine besonders kompakte Bauweise ergibt sich dadurch, dass je eine Magnetscheibe in einem senkrecht vom Pedalhebel weg ragenden Wellenzapfen einer mit dem Pedalhebel drehfest verbundenen Welle aufgenommen ist, welche im Lagerbock schwenkbar gelagert ist. Die Mittelachse der Wellenzapfen ist dann koaxial mit der Schwenkachse.

Die Welle weist eine zentrale, den Wellenzapfen zwischengeordnete Ausnehmung auf, in welche das Sensorelement ragt, welches mit dem Lagerbock verbunden ist. Dadurch sitzt das Sensorelement zwischen den beiden Wellenzapfen, welche die Magneten tragen, so dass bei einem Verkippen des Pedalhebels sich zwar nach wie vor der Winkel zwischen den Magnetfeldlinien und dem Sensorelement ändert, bedingt durch die beidseitige Magnetfeldbeaufschlagung diese Änderungen jedoch weitgehend kompensiert werden.

Durch die in den Unteransprüchen aufgeführten Maßnahmen sind vorteilhafte Weiterbildungen und Verbesserungen der im Patentanspruch 1 angegebenen Erfindung möglich.

Die Anmelderin hat durch Versuche festgestellt, dass sich ein besonders homogenes Magnetfeld ergibt, wenn die Magnetscheiben jeweils auf ihrer zum Sensorelement weisenden Seite eine Ausnehmung aufweisen.

Das Sensorelement beinhaltet bevorzugt wenigstens einen integrierten Hall-IC, mit Hall-Elementen, welche parallel oder senkrecht zu den Magnetscheiben angeordnet sind.

Um einen möglichst großes Volumen zur Erzeugung einer hohen Magnetfeldstärke innerhalb der kreisförmigen Querschnitte der beiden Wellenzapfen einnehmen zu können, weisen die Magnetscheiben beispielsweise im Querschnitt gesehen zwei den Magnetpolen gegenüberliegende, parallel zueinander und gerade ausgebildete Umfangsflächenabschnitte und zwei diesen entlang des Umfangs zwischengeordnete kreisbogenförmige Umfangsflächenabschnitte auf.

Eine vorteilhafte Doppelfunktion der die Magnetscheiben lagernden Wellenzapfen ergibt sich, wenn eine radial äußere Umfangsfläche eines Wellenzapfens zugleich eine Lagerfläche des Pedalhebels bildet. Um eine pedalkraftabhängige Hysterese zu erzeugen ist beispielsweise wenigstens ein Teil der Umfangsfläche der Wellenzapfen mit einem Reibbelag versehen, welcher mit einer zugeordneten Lagerfläche des Lagerbocks zusammenwirkt.

Wenn der Pedalhebel durch wenigstens ein Federelement in seine Ausgangslage vorgespannt ist, welches sich mit seinem einen Ende am Lagerbock und an seinem anderen Ende an einem Stützabschnitt des Pedalhebels abstützt, wobei dem Stützabschnitt und dem anderen Ende des Federelements ein im Lagerbock in Spannrichtung des Federelements linear geführtes Druckelement zwischengeordnet ist, an welchem eine Wälzfläche des Stützabschnitts abwälzbar ist, dann kann verhindert werden, dass das Federelement beim Spannen während einer Pedalbetätigung ausknickt. Denn durch die lineare Zwangsführung des Druckelements im Lagerbock ist der Spannweg des Federelements vorgegeben. Die beim Abwälzen des Stützabschnitts am Druckelements auftretenden Querkräfte werden dann durch die Führungen des Druckelements in den Lagerbock abgeleitet und nicht auf das Federelement übertragen, welches dann querkraftfrei betätigt wird. Dann können Pedalhebel mit großem Hebelarm am Stützabschnitt und hoher Federelementspannung bei kleinem Bauraum realisiert werden.

Gemäß einer Weiterbildung kann das Druckelement durch das Federelement in der Ausgangslage des Pedalhebels gegen einen Anschlag derart abgestützt sein, dass im wesentlichen keine Federkräfte auf den Pedalhebel wirken. In der Ausgangslage des Pedalhebels werden die Federkräfte folglich über den Anschlag im Lagerbock abgestützt, was den Vorteil hat, dass die mechanische Belastung des Pedalhebels und seiner Lagerung im Lagerbock sehr gering ist, wodurch das Sensorsignal beeinflussende Verformungen vermieden werden und sich die Lebensdauer des Fahrpedalmoduls erhöht.

Nicht zuletzt können zwischen dem Druckelement und dem Lagerbock zwei identische Federelemente parallel zueinander angeordnet sein, was einen vorteilhaften Einsatz von Gleichteilen ermöglicht.

### Zeichnungen

Ein Ausführungsbeispiel der Erfindung ist in der Zeichnung dargestellt und in der nachfolgenden Beschreibung näher erläutert. In der Zeichnung zeigt
- Fig.1: einen Längsquerschnitt eines Fahrpedalmoduls gemäß einer bevorzugten Ausführungsform;
- Fig.2: eine Querschnittsdarstellung entlang der Linie II-II von Fig.1;
- Fig.3: eine Querschnittsdarstellung durch einen Wellenzapfen eines Pedalhebels des Fahrpedalmoduls;
- Fig.4: eine Querschnittsdarstellung entlang der Linie IV-IV von Fig.2;
- Fig.5: eine Querschnittsdarstellung entlang der Linie V-V von Fig.1
- Fig.6: eine schematische Darstellung eines Magnetfeldlinienverlaufs.

### Beschreibung des Ausführungsbeispiels

Das erfindungsgemäße Fahrpedalmodul 1 wird zur Steuerung einer Antriebsmaschine, vorzugsweise einer Brennkraftmaschine eines Kraftfahrzeugs verwendet, deren Drosselklappe von einem Stellmotor verstellbar ist. In diesem Fall dient das Fahrpedalmoduls 1 zur Erzeugung von elektrischen Signalen für den Stellmotor, um abhängig von der Stellung eines Pedalhebels 2 des Fahrpedalmoduls 1 die Leistung der Brennkraftmaschine zu steuern. Die Antriebsmaschine kann aber auch beispielsweise ein durch elektrische Signale angesteuerter Elektromotor sein.

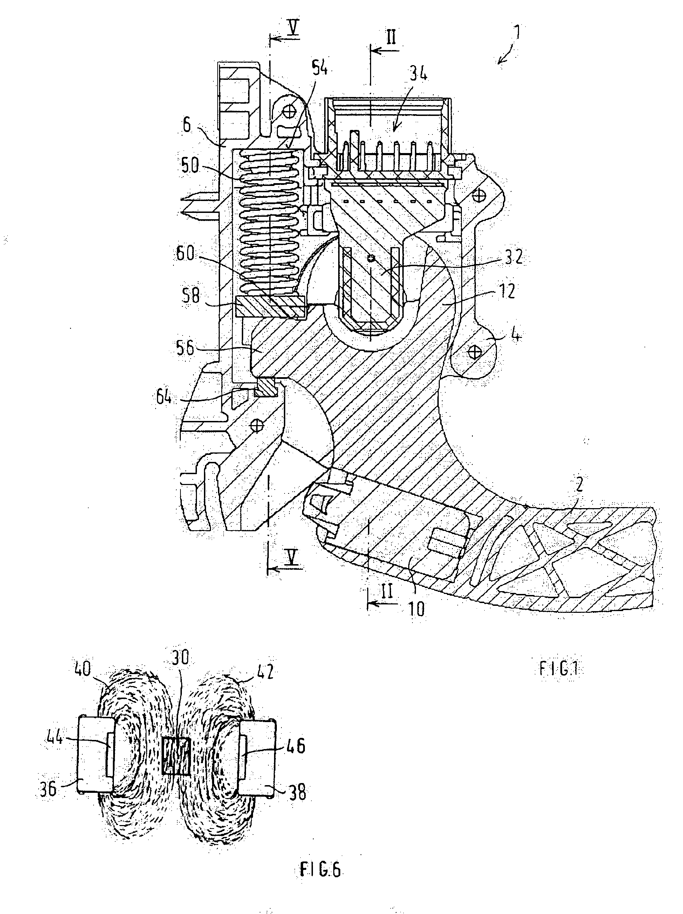

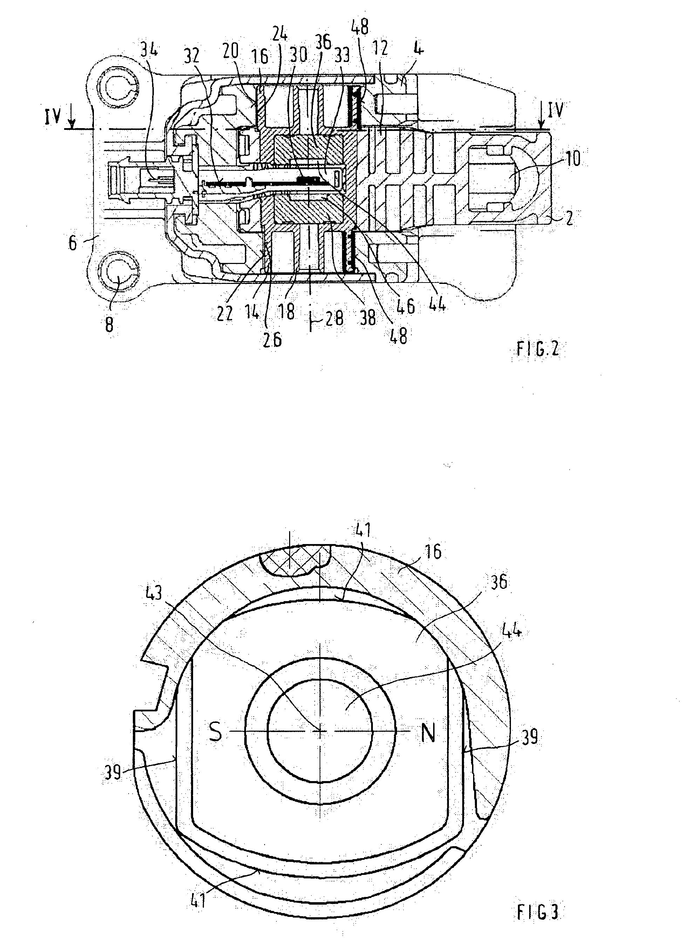

Das Fahrpedalmodul 1 wird vom Fahrer des Kraftfahrzeugs fußbetätigt und beinhaltet gemäß Fig.1 den beispielsweise hängenden Pedalhebel 2, welcher vorzugsweise das unmittelbar vom Fahrerfuß betätigte Gaspedal darstellt. Alternativ kann es sich bei dem Pedalhebel 2 um einen Hebel einer weitere Hebel enthaltenden Hebel- oder Gestängemechanik handeln, welcher mit dem Gaspedal gekoppelt ist. Weiterhin umfasst das Fahrpedalmodul 1 einen Lagerbock 4 als Haltestruktur für den Pedalhebel 2, welcher vorzugsweise unmittelbar im Fußbereich des Fahrers mittels von einer Bodenplatte 6 des Lagerbocks seitlich hervorragenden Schraubaugen 8 befestigbar ist (Fig.2). Darüber hinaus kann das Fahrpedalmodul 1 zusätzlich mit einem mechanischen Kick-Down-Schalter 10 für ein automatisches Getriebe des Kraftfahrzeugs versehen sein, welche beispielsweise in der DE 195 36 699 A1 beschrieben ist.

Wie aus Fig.2 hervorgeht, weist der Pedalhebel 2 einen Lagerabschnitt 12 auf, der beispielsweise durch eine Welle 14 gebildet wird, welche in eine Bohrung des Pedalhebels 2 eingepresst ist. Die Welle 14 beinhaltet zwei senkrecht vom Pedalhebel 2 seitlich weg ragende, beispielsweise symmetrisch angeordnete Wellenzapfen 16, 18, welche mit ihren radial äußeren Umfangsflächen als Lagerflächen 20, 22 in komplementär ausgebildeten Lagerflächen 24, 26 des Lagerbocks 4 um eine Schwenkachse 28 schwenkbar gehalten sind.

Die Schwenkbewegungen des Pedalhebels 2 relativ zum Lagerbock 4 werden durch einen Drehwinkelsensor 30 in ein elektrisches Signal gewandelt, welches den Drehwinkel des Pedalhebels 2 relativ zum Lagerbock 4 repräsentiert. Als Drehwinkelsensor 30 wird vorzugsweise wenigstens ein integrierter Hall-IC verwendet, welcher eine Richtungsänderung eines Magnetfeldes detektieren kann. Solche Hall-IC's 30 sind beispielsweise aus der EP 1 182 461 A2 bekannt.

Der Hall-IC 30 wird beispielsweise in einem Sensorgehäuse durch ein Druckgassverfahren mit einem Schmelzkleber umhüllt und auf einer Platine 32 befestigt, welche sich senkrecht zur Schwenkachse 28 in eine zentrale Ausnehmung 33 des Pedalhebels 2 zwischen den beiden Wellenzapfen 16, 18 erstreckt und über einen Steckanschluss 34 mit Pins an eine weiterführende elektrische Leitung angeschlossen werden kann, welche die elektrischen Signale an eine Auswerteelektronik weiterleitet. Alternativ kann jeglicher Sensor verwendet werden, welcher eine Änderung der Richtung eines Magnetfeldes detektieren kann, beispielsweise auch ein magnetöresistiver Sensor. Der Drehwinkelsensor 30 ist vorzugsweise im Bereich der Schwenkachse 28 angeordnet.

Das Magnetfeld wird durch wenigstens zwei bipolare Magneten 36, 38 erzeugt, denen der Hall-IC 30 symmetrisch zwischengeordnet ist. Dies bewirkt, dass die von den Magneten 36, 38 jeweils erzeugten Magnetfelder den Drehwinkelsensor 30 von zwei verschiedenen Seiten her beaufschlagen und sich in einem Schnittbereich überdecken und addieren, was eine vorteilhaft hohe Magnetfeldstärke und eine hohe Homogenität des Magnetfeldes im Bereich des Sensors 30 bedingt.

In bevorzugter Weise sind die Magneten als identische zylindrische Magnetscheiben 36, 38 ausgebildet und in Bezug zueinander koaxial und parallel angeordnet, wobei jeweils ein Magnetpol N oder S einem Ende der Scheibenebene zugeordnet ist, wie aus Fig.3 hervorgeht, welche die Magnetscheibe 36 vom Hall-IC 30 aus gesehen zeigt. Mit anderen Worten ist an den Stirnseiten der Magnetscheiben 36, 38 eine 2-polige Magnetisierung N, S vorhanden. Ein solcher Magnet 36, 38 wird auch als diametral magnetisiert bezeichnet.

Um einen möglichst großes Volumen zur Erzeugung einer hohen Magnetfeldstärke innerhalb der kreisförmige Querschnitte der beiden Wellenzapfen 16, 18 einnehmen zu können, weisen die Magnetscheiben 36, 38 beispielsweise im Querschnitt gesehen zwei den Magnetpolen N, S gegenüberliegende, parallel zueinander und gerade ausgebildete Umfangsflächenabschnitte 39 und zwei diesen entlang des Umfangs zwischengeordnete kreisbogenförmige Umfangsflächenabschnitte 41 auf.

Darüber hinaus ist eine sich senkrecht zu den Ebenen der Magnetscheiben 36, 38 erstreckende Mittelachse 43 vorzugsweise koaxial mit der Schwenkachse 28. Die beiden Magnetscheiben 36, 38 werden beispielsweise durch ein einziges Spritzwerkzeug und einem einzigen Fertigungsschritt in die Wellenzapfen 16, 18 im Rahmen eines Kunststoffspritzverfahrens eingespritzt, wobei von der zum Hall-IC 30 weisenden Seitenfläche lediglich der Rand der Magnetscheiben 36, 38 beispielsweise teilweise umspritzt und der Rest freigelassen wird (Fig.3). Während des Kunststoffspritzverfahrens können die Magnetscheiben 36, 38 durch im Spritzwerkzeug integrierte Magnetspulen zu Permanentmagneten aufmagnetisiert werden.

Fig.6 zeigt den Verlauf der magnetisches Feldlinien 40, 42, welche von den beiden Magnetscheiben 36, 38 erzeugt werden, wobei diese sich in einem zentralen, eine Symmetrieebene der Magnetscheiben 36, 38 bildenden Bereich überschneiden, in welchem sich der Hall-IC 30 befindet und dort eine hohe Dichte aufweisen. Dieser Hall-IG 30 beinhaltet einen oder mehrere Hall-Elemente, welche parallel oder senkrecht zu den Magnetfeldlinien 40, 42 der Magnetscheiben 36, 38 angeordnet sein können, je nachdem, ob vertikale oder horizontale Hallelemente verwendet werden. Horizontale Hallelemente sind empfindlich auf die Komponente des Magnetfeldes, die senkrecht auf ihre Oberfläche trifft, während vertikale Hallelemente gegenüber der Komponente des Magnetfeldes empfindlich sind, welche parallel zu ihrer Oberfläche verläuft. Zusätzlich können die Hallelemente gemäß der in der der EP 1 182 461 A2 offenbarten Lehre auf Magnetfeldkonzentratoren aus ferromagnetischem Material angeordnet sein, welche die magnetischen Feldlinien im Bereich des jeweiligen Hallelements in eine für die Detektion günstige Richtung umlenken. Darüber hinaus hat die Anmelderin durch Versuche festgestellt, dass sich ein besonders homogenes Magnetfeld ergibt, wenn die Magnetscheiben 36, 38 auf ihrer zum Drehwinkelsensor 30 weisenden Seite jeweils eine Ausnehmung 44,46 aufweisen.

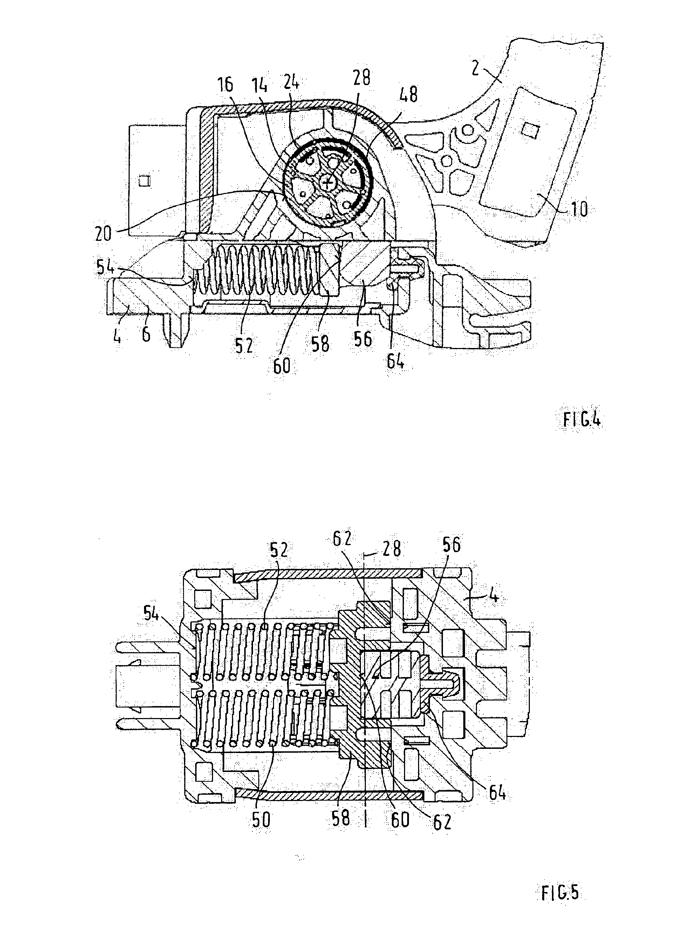

Um eine pedalkraftabhängige Hysterese zu erzeugen, ist beispielsweise wenigstens ein Teil der Umfangsfläche der Wellenzapfen 16, 18 mit einem Reibbelag 48 versehen, welcher mit den zugeordneten Lagerflächen 24, 26 des Lagerbocks 4 zusammenwirkt, wie insbesondere in Fig.4 gezeigt ist. Vorzugsweise erstreckt sich ein solcher Reibbelag 48 am Umfang der Wellenzapfen 16, 18 über ca. 170 Grad.

Der Pedalhebel 2 ist aus Sicherheitsgründen durch wenigstens zwei sich parallel zur Bodenplatte 6 des Lagerbocks 4 und linear erstreckende Federelemente 50, 52 in seine Ausgangslage vorgespannt, wie insbesondere aus Fig.5 hervorgeht. Die Federelemente 50, 52 sind bevorzugt parallel zueinander angeordnete, identische Schraubenfedern, welche sich mit ihrem einen Ende an einer am Lagerbock ausgebildeten Stützfläche 54 und mit ihrem anderen Ende an einem hervorkragenden, in Bezug zur Schwenkachse 28 einen Hebelarm bildenden Stützarm 56 des Pedalhebels 2 abstützen. Dabei ist dem Stützarm 56 des Pedalhebels 2 und den anderen Enden der Federelemente 50, 52 ein im Lagerbock 4 in Spannrichtung der Federelemente 50, 52 linear geführtes Druckelement 58 zwischengeordnet.

Die Kontaktfläche des Stützarmes 56 des Pedalhebels 2 mit dem Druckelement 58 ist als vorzugsweise ballig konvexe Wälzfläche 60 ausgebildet, so dass das Druckelement 58 an dieser Wälzfläche 60 abwälzen kann, wenn der Pedalhebel 2 um die Schwenkachse 28 geschwenkt und dadurch eine geringfügige radiale Relativbewegung zwischen dem Stützarm 56 und dem Druckelement 58 stattfindet. Dadurch kann verhindert werden, dass die Federelemente 50, 52 beim Spannen während einer Pedalbetätigung ausknicken. Denn durch die lineare Zwangsführung des Druckelements 58 im Lagerbock ist die parallel zu den Mittelachsen der Federelemente 50, 52 verlaufende Spannrichtung vorgegeben. Die beim Abwälzen des Stützarmes 56 am Druckelement 58 auftretenden Querkräfte werden dann durch die Führungen, an denen das Druckelement 58 geführt ist in den Lagerbock 4 abgeleitet und nicht auf die Federelemente 50, 52 übertragen, welche dann querkraftfrei sind.

Das Druckelement 58 kann durch die Wirkung der von den Federelementen 50, 52 ausgeübten Druckkräfte in der Ausgangslage des Pedalhebels 2, d.h. in einer Leerlaufstellung, gegen einen oder mehrere am Lagerbock 4 ausgebildete Anschläge 62 derart abgestützt sein, dass im wesentlichen keine Federkräfte auf den Pedalhebel 2 wirken. In der Ausgangslage des Pedalhebels 2 werden die Federkräfte folglich über die Anschläge 62 im Lagerbock 4 abgestützt. Um den Pedalhebel 2 in der Ausgangsstellung dennoch in einer definierten Lage zu halten, ist die von den Federelementen 50, 52 weg weisende Stirnfläche des Stützarms 56 des Pedalhebels 2 gegen einen vorzugsweise elastischen, am Lagerbock 4 gehaltenen Anschlag 64 abgestützt. Somit ist der Stützarm 56 in der Ausgangsstellung dem Druckelement 58 und dem Anschlag 64 nahezu kraftfrei zwischengeordnet. Bei Betätigung des Pedalhebels 2 rückt der Stützarm 56 vom Anschlag 64 weg und spannt über das Druckelement 58 die Federelemente 50, 52, welche dann eine der Betätigungskraft entgegengerichtete Federkraft auf den Pedalhebel 2 ausüben.

## Patentansprüche

1. Fahrpedalmodul (1) zum Steuern der Leistung einer Antriebsmaschine insbesondere einer Brennkraftmaschine eines Fahrzeugs, mit wenigstens einem Sensorelement (30), sowie mit einem Lagerbock (4) und mit einem an dem Lagerbock (4) um eine Schwenkachse (28) drehbar gehaltenen Pedalhebel (2), wobei die Schwenkbewegung des Pedalhebels (2) relativ zum Lagerbock (4) durch das wenigstens eine Sensorelement (30) detektierbar ist, wobei das Fahrpedalmodul (1) wenigstens zwei bipolare, in Bezug zu einer Scheibenebene diametral magnetisiert ausgebildete Magnetscheiben (36, 38) umfasst, wobei mit Hilfe des wenigstens einen Sensorelements (30) eine aus der Schwenkbewegung des Pedalhebels (2) relativ zum Lagerbock (4) herrührende Änderung der Richtung wenigstens eines Magnetfeldes (40, 42) in ein elektrisches Signal wandelbar ist, welches den Drehwinkel des Pedalhebels (2) relativ zum Lagerbock (4) repräsentiert, wobei das Magnetfeld (40, 42) durch die wenigstens zwei Magnetscheiben (36, 38) erzeugt wird, denen das Sensorelement (30) zwischengeordnet ist, wobei die Magnetscheiben (36, 38) identisch ausgebildet und in Bezug zum Sensorelement (30) symmetrisch angeordnet sind, wobei die Magnetscheiben (36, 38) in Bezug zueinander koaxial und parallel angeordnet sind, **dadurch gekennzeichnet, dass** die Mittelachsen (43) der Magnetscheiben (36, 38) koaxial mit der Schwenkachse (28) angeordnet sind und dass je eine Magnetscheibe (36, 38) in einem senkrecht vom Pedalhebel (2) weg ragenden Wellenzapfen (16, 18) einer mit dem Pedalhebel (2) drehfest verbundenen Welle (14) aufgenommen ist, welche im Lagerbock (4) schwenkbar gelagert ist und eine zentrale, den Wellenzapfen (16, 18) zwischengeordnete Ausnehmung (33) aufweist, in welche das Sensorelement (30) ragt, welches mit dem Lagerbock (4) verbunden ist.

2. Fahrpedalmodul nach Anspruch 1, **dadurch gekennzeichnet, dass** die Magnetscheiben (36, 38) jeweils auf ihrer zum Sensorelement (30) weisenden Seite eine Ausnehmung (44, 46) aufweisen.

3. Fahrpedalmodul nach wenigstens einem der Ansprüche 1 bis 2, **dadurch gekennzeichnet, dass** die Magnetscheiben (36, 38) im Querschnitt gesehen zwei den Magnetpolen (N, S) gegenüberliegende, parallel zueinander und gerade ausgebildete Umfangsflächenabschnitte (39) aufweisen und zwei diesen entlang des Umfangs zwischengeordnete kreisbogenförmige Umfangsflächenabschnitte (41).

4. Fahrpedalmodul nach wenigstens einem der Ansprüche 1 bis 3, **dadurch gekennzeichnet, dass** da Sensorelement wenigstens einen integrierten Hall-IC (30) beinhaltet, mit Hall-Elementen, welche parallel oder senkrecht zu den Magnetscheiben (36, 38) angeordnet sind.

5. Fahrpedalmodul nach Anspruch 1, **dadurch gekennzeichnet, dass** je eine radial äußere Umfangsfläche eines Wellenzapfens (16, 18) eine Lagerfläche des Pedalhebels (2) bildet.

6. Fahrpedalmodul nach Anspruch 6, **dadurch gekennzeichnet, dass** wenigstens ein Teil der Umfangsfläche der Wellenzapfen (16, 18) mit einem Reibbelag (48) versehen ist, welcher mit einer zugeordneten Lagerfläche (24, 26) des Lagerbocks (4) zusammenwirkt.

7. Fahrpedalmodul nach wenigstens einem der vorhergehenden Ansprüche,
**dadurch gekennzeichnet, dass** der Pedalhebel (2) durch wenigstens ein Federelement (50, 52) in seine Ausgangslage vorgespannt ist, welches sich mit seinem einen Ende am Lagerbock (4, 54) und an seinem anderen Ende an einem Stützabschnitt (56) des Pedalhebels (2) abstützt, wobei dem Stützabschnitt (56) und dem anderen Ende des Federelements (50, 52) ein im Lagerbock (4) in Spannrichtung des Federelements (50, 52) linear geführtes Druckelement (58) zwischengeordnet ist, an welchem eine Wälzfläche (60) des Stützabschnitts (56) abwälzbar ist.

8. Fahrpedalmodul nach Anspruch 7, **dadurch gekennzeichnet, dass** das Druckelement (58) durch die Federkräfte des wenigstens einen Federelements (50, 52) in der Ausgangslage des Pedalhebels (2) gegen wenigstens einen Anschlag (62) derart abgestützt ist, dass im wesentlichen keine Federkräfte auf den Pedalhebel (2) wirken.

9. Fahrpedalmodul nach Anspruch 7 oder 8, **dadurch gekennzeichnet, dass** zwischen dem Druckelement (58) und dem Lagerbock (4) zwei identische Federelemente (50, 52) parallel zueinander angeordnet sind.

10. Fahrpeaalmodul nach Anspruch 9, **dadurch gekennzeichnet, dass** in der Ausgangsstellung der Stützabschnitt (56) des Pedalhebels (2) gegen einen am Lagerbock (4) gehaltenen elastischen Anschlag (64) abgestützt ist.

## Claims

1. Accelerator pedal module (1) for controlling the power of a drive machine, in particular of an internal combustion engine of a vehicle, having at least one sensor element (30), and having a bearing block (4) and having a pedal lever (2) which is secured to the bearing block (4) so as to be rotatable about a pivoting axis (28), wherein the pivoting movement of the pedal lever (2) relative to the bearing block (4) can be detected by means of the at least one sensor element (30), wherein the accelerator pedal module (1) comprises at least two bipolar magnet discs (36, 38) which are embodied diametrically magnetized with respect to a disc plane, wherein a change in the direction of at least one magnetic field (40, 42) which originates from the pivoting movement of the pedal lever (2) relative to the bearing block (4) can be converted with the aid of the at least one sensor element (30) into an electrical signal which represents the rotational angle of the pedal lever (2) relative to the bearing block (4), wherein the magnetic field (40, 42) is generated by means of the at least two magnet discs (36, 38) between which the sensor element (30) is arranged, wherein the magnet discs (36, 38) are of identical design and are arranged symmetrically with respect to the sensor element (30), wherein the magnet discs (36, 38) are arranged coaxially and in parallel with respect to one another, **characterized in that** the centre axes (43) of the magnet discs (36, 38) are arranged coaxially with the pivoting axis (28), and **in that** in each case one magnet disc (36, 38) is accommodated in a shaft journal (16, 18), projecting perpendicularly away from the pedal lever (2) of a shaft (14) which is connected to the pedal lever (2) in a rotationally fixed fashion and which is pivotably mounted in the bearing block (4), and has a central cutout (33) which is arranged between the shaft journals (16, 18) and into which the sensor element (30) projects, said sensor element (30) being connected to the bearing block (4).

2. Accelerator pedal module according to Claim 1, **characterized in that** the magnet discs (36, 38) each have a cutout (44, 46) on their side pointing towards the sensor element (30).

3. Accelerator pedal module according to at least one of Claims 1 to 2, **characterized in that** the magnet discs (36, 38) have, when viewed in cross section, two circumferential surface sections (39) which lie opposite the magnet poles (N, S) and are embodied so as to be parallel to one another and straight, and two arcuate circumferential surface sections (41) which are arranged between the latter, along the circumferential.

4. Accelerator pedal module according to at least one of Claims 1 to 3, **characterized in that** the sensor element contains at least one integrated Hall IC (30), with Hall elements which are arranged parallel or perpendicular with respect to the magnet discs (36, 38).

5. Accelerator pedal module according to Claim 1, **characterized in that** in each case a radially outer circumferential surface of a shaft journal (16, 18) forms a bearing surface of the pedal lever (2).

6. Accelerator pedal module according to Claim 6, **characterized in that** at least a portion of the circumferential surface of the shaft journals (16, 18) is provided with a frictional coating (48) which interacts with an assigned bearing surface (24, 26) of the bearing block (4).

7. Accelerator pedal module according to at least one of the preceding claims, **characterized in that** the pedal lever (2) is pre-stressed into its initial position by means of at least one spring element (50, 52) which is supported by one of its ends on the bearing block (4, 54) and on its other end on a supporting section (56) of the pedal lever (2), wherein a pressure element (54) which is linearly guided in the bearing block (4), in the tensioning direction of the spring element (50, 52), is arranged between the supporting section (56) and the other end of the spring element (50, 52), and a rolling surface (60) of the supporting section (56) can roll on said pressure element (58).

8. Accelerator pedal module according to Claim 7, **characterized in that** the pressure element (58) is supported by the spring forces of the at least one spring element (50, 52) in the initial position of the pedal lever (2) against at least one stop (62), in such a way that essentially no spring forces act on the pedal lever (2).

9. Accelerator pedal module according to Claim 7 or 8, **characterized in that** two identical spring elements (50, 52) are arranged parallel to one another between the pressure element (58) and the bearing block (4).

10. Accelerator pedal module according to Claim 9, **characterized in that** in the initial position the supporting section (56) of the pedal lever (2) is supported against an elastic stop (64) which is secured to the bearing block (4).

## Revendications

1. Module de pédale d'accélérateur (1) destiné à commander la puissance d'une groupe propulseur, notamment d'un moteur à combustion interne d'un véhicule, comprenant au moins un élément de détection (30), et comprenant aussi un support de palier (4) ainsi qu'un levier de pédale (2) monté rotatif sur le support de palier (4) autour d'un axe de pivotement (28), le mouvement de pivotement du levier de pédale (2) par rapport au support de palier (4) pouvant être détecté par ledit élément de détection (30), le module de pédale d'accélérateur (1) comprenant au moins deux disques magnétiques bipolaires (36, 38), magnétisés diamétralement en référence à un plan de disque, une modification de la direction d'au moins un champ magnétique (40, 42), découlant du mouvement de pivotement du levier de pédale (2) par rapport au support de palier (4), pouvant être convertie à l'aide dudit élément de détection (30) en un signal électrique qui représente l'angle de rotation du levier de pédale (2) par rapport au support de palier (4), le champ magnétique (40, 42) étant généré par lesdits deux disques magnétiques (36, 38) entre lesquels est interposé l'élément de détection (30), les disques magnétiques (36, 38) étant de configuration identique et disposés symétriquement par rapport à l'élément de détection (30), les disques magnétiques (36, 38) étant disposés de manière coaxiale et parallèlement en référence l'un à l'autre, **caractérisé en ce que** les axes centraux (43) des disques magnétiques (36, 38) sont disposés de manière coaxiale par rapport à l'axe de pivotement (28) et **en ce qu'**un disque magnétique (36, 38) est à chaque fois accueilli dans un tourillon d'arbre (16, 18), qui fait saillie perpendiculairement du levier de pédale (2), d'un arbre (14) relié en rotation solidaire avec le levier de pédale (2), monté pivotant dans le support de palier (4) et qui possède une cavité (33) interposée entre les tourillons d'arbre (16, 18) dans laquelle fait saillie l'élément de détection (30), lequel est relié avec le support de palier (4).

2. Module de pédale d'accélérateur selon la revendication 1, **caractérisé en ce que** les disques magnétiques (36, 38) possèdent respectivement une cavité (44, 46) sur leur côté dirigé vers l'élément de détection (30).

3. Module de pédale d'accélérateur selon au moins l'une des revendications 1 à 2, **caractérisé en ce que** les disques magnétiques (36, 38), vus en coupe transversale, possèdent deux portions de surface circonférentielle (39) opposées aux pôles magnétiques (N, S), parallèles l'une à l'autre et de configuration rectiligne ainsi que deux portions de surface circonférentielle (41) en forme d'arc de cercle interposées entre celles-ci le long du pourtour.

4. Module de pédale d'accélérateur selon au moins l'une des revendications 1 à 3, **caractérisé en ce que** l'élément de détection contient au moins un CI à effet hall intégré (30), avec des éléments à effet Hall, lequel est disposé parallèlement ou perpendiculairement aux disques magnétiques (36, 38).

5. Module de pédale d'accélérateur selon la revendication 1, **caractérisé en ce qu'**une surface circonférentielle radialement extérieure d'un tourillon d'arbre (16, 18) forme à chaque fois une surface d'appui du levier de pédale (2).

6. Module de pédale d'accélérateur selon la revendication 5, **caractérisé en ce qu'**au moins une partie de la surface circonférentielle des tourillons d'arbre (16, 18) est munie d'une garniture de friction (48), laquelle coopère avec une surface d'appui (24, 26) associée du support de palier (4).

7. Module de pédale d'accélérateur selon au moins l'une des revendications précédentes, **caractérisé en ce que** le levier de pédale (2) est précontraint dans sa position initiale par au moins un élément ressort (50, 52), lequel s'appui avec l'une de ses extrémités sur le support de palier (4, 54) et avec son autre extrémité sur une portion d'appui (56) du levier de pédale (2), un élément de pression (58) guidé linéairement dans le support de palier (4) dans le sens du serrage de l'élément ressort (50, 52) étant interposé entre la portion d'appui (56) et l'autre extrémité de l'élément ressort (50, 52), et une surface de roulement (60) de la portion d'appui (56) pouvant se dérouler sur celui-ci.

8. Module de pédale d'accélérateur selon la revendication 7, **caractérisé en ce que** l'élément de pression (58) est mis en appui par la force de ressort dudit élément ressort (50, 52) en position initiale du levier de pédale (2) contre au moins une butée (62) de telle sorte que sensiblement aucune force de ressort n'agit sur le levier de pédale (2).

9. Module de pédale d'accélérateur selon la revendication 7 ou 8, **caractérisé en ce qu'**entre l'élément de pression (58) et le support de palier (4) sont disposés dans éléments ressorts (50, 52) identiques parallèlement l'un à l'autre.

10. Module de pédale d'accélérateur selon la revendication 9, **caractérisé en ce qu'**en position initiale, la portion d'appui (56) du levier de pédale (2) s'appuie contre une butée élastique (64) maintenus sur le support de palier (4).
